# FASCICULE DE BREVET EUROPEEN

(11) **EP 1 712 881 B1**
(45) Date de publication et mention de la délivrance du brevet: **12.11.2014**
(21) Numéro de dépôt: 06290491.7
(22) Date de dépôt: 28.03.2006
(51) Int. Cl.: G01D 5/12, G01P 3/44, F16J 15/32

(54) **Codeur pour arbre mobile, dispositif comprenant un tel codeur et procédé de fabrication d'un tel codeur**
Kodiereinrichtung für bewegliche Welle, Vorrichtung, die eine solche Kodiereinrichtung umfasst, und Verfahren zur Herstellung einer solchen Kodiereinrichtung
Encoder for a moving camshaft, device consisting of said encoder and manufacturing procedure for said encoder

(30) Priorité: 11.04.2005 FR 0503562
(43) Date de publication de la demande: 18.10.2006
(73) Titulaire: HUTCHINSON, 75008 Paris (FR)
(72) Inventeur: Guerbe, Laurent, Segre 49500 (FR); Zarife, Victor, 45120 Cepoy (FR)
(74) Mandataire: Cabinet Plasseraud

(56) Documents cités:
- EP-A- 1 517 149
- US-A- 5 684 444
- US-A1- 2002 140 418
- US-B1- 6 815 054

## Description

La présente invention se rapporte à un codeur de déplacement pour arbre mobile, et plus particulièrement, à un codeur comprenant un manchon destiné à être calé sur l'arbre, et un élément codant notamment qui est solidaire du manchon, l'élément codant présentant une zone codeuse munie d'au moins un repère polarisé et protégée par un moyen de protection.

Dans de nombreuses applications, et notamment pour des arbres de roues, des arbres de sortie de boîtes de vitesse ou des vilebrequins de moteurs à combustion interne, on équipe les arbres rotatifs de dispositif de codage de déplacement angulaire pour connaître leur vitesse de rotation instantanée et/ou leur position angulaire et/ou leur sens de rotation.

Il est avantageux de réaliser l'élément codant à l'aide d'un polymère magnétisable, c'est-à-dire un polymère de type élastomère, ou tout autre matière pouvant assurer une fonction de liant, et contenant une forte proportion de particules magnétiques comme par exemple de la poudre de ferrite. En effet, de tels polymères magnétisables peuvent être configurés dans des formes variées par moulage et leur fixation à un support peut être réalisée par adhérisation directe. Mais ces polymères sont relativement friables et leur durée de vie peut être réduite dans certaines applications sévères où le codeur angulaire est particulièrement exposé à des particules abrasives, comme par exemple des poussières ou du sable.

Il a été proposé de protéger l'élément codant par une pièce de couverture en métal amagnétique, qui est montée sur le codeur de manière à couvrir au moins la zone codeuse, comme décrit dans le document US-A-2002/040418. toutefois, la pièce supplémentaire de couverture qui doit être fixée fermement au codeur, augmente la complexité et le coût de fabrication. Par ailleurs, cette pièce doit présenter une épaisseur relativement importante pour avoir une tenue mécanique suffisante, ce qui augmente l'entrefer séparant l'élément codant du capteur magnétique, dégrade le champ magnétique émis vers le capteur, et augmente l'encombrement du codeur étant donné que le polymère magnétisable doit être relativement massif pour générer un champ magnétique détectable. La présence d'une pièce de couverture peut même nécessiter d'augmenter l'épaisseur du polymère magnétisable, mesurée perpendiculairement à la zone codeuse, pour compenser la perturbation du champ magnétique.

Le document EP 1 517 149 A décrit un codeur destiné être calé sur un arbre mobile et comportant un élément codant magnétique. Ce codeur est protégé par un revêtement résineux réalisé sur toute sa surface. Toutefois, il s'agit d'un revêtement de protection contre la rouille qui n'offre pas une protection réellement efficace contre l'abrasion par des particules extérieures et dont l'épaisseur est relativement épaisse. Du fait de cette épaisseur et des charges anti-corrosion qui peuvent être incorporées dans ce revêtement, l'intensité du champ magnétique émis vers un capteur est alors minimisée.

La présente invention a pour but de protéger l'élément codant du codeur de déplacement, tout en minimisant l'influence du moyen de protection sur le champ magnétique généré et sur les caractéristiques globales du codeur.

A cet effet, la présente invention a pour objet un codeur de déplacement du type précité, caractérisé en ce que le moyen de protection comprend une couche mince de matière déposée par plasma directement sur l'élément codant et solidaire dudit élément, qui couvre au moins la zone codeuse de celui-ci.

Grâce au dépôt par plasma, on obtient une adhésion de la couche protectrice suffisamment forte pour rester solidaire du polymère magnétisable malgré les contraintes mécanique subies par le codeur de déplacement du fait des vibrations et accélérations de l'arbre mobile. Cette adhésion satisfaisante est obtenue même par un dépôt créant uniquement un contact intime entre la couche de protection et le polymère magnétisable, mais elle peut être encore améliorée en mettant en oeuvre un procédé de dépôt chimique en phase vapeur assisté par plasma (PECVD) qui crée des liaisons chimiques covalentes entre la matière de la couche de protection et le polymère magnétisable. Le problème de la fixation du moyen de protection à l'élément codant est donc résolu.

De plus, les inventeurs ont constaté que, même si la couche mince de protection présentait une résistance mécanique intrinsèque très inférieure aux pièces de couverture de l'art antérieur, cette couche augmentait de manière très significative la résistance superficielle à l'abrasion du polymère magnétisable, lui conférant ainsi une durée de vie importante lorsque le codeur de déplacement est utilisé dans un environnement agressif. En effet, le dépôt par plasma forme une couche dure, du moins une couche qui présente une dureté supérieure à l'élément codant et la plupart des polymères. La couche de protection forme également, selon la nature de la matière déposée, une barrière contre des produits susceptibles d'attaquer chimiquement le polymère. Du fait de sa très faible épaisseur, de l'ordre de quelques dizaines à quelques centaines de nanomètres, par rapport à l'épaisseur d'un élément couvrant de l'art antérieur qui est de l'ordre du millimètre, les champs magnétiques formant les repères polarisés sont très peu perturbés et l'entrefer n'est pas augmenté. La matière déposée par plasma peut être choisie de manière à ce que la couche de protection soit amagnétique, ce qui, combiné à sa faible épaisseur, supprime quasiment tout effet sur les champs magnétiques.

Dans des modes de réalisation préférés de l'invention, on a recours en outre à l'une et/ou à l'autre des dispositions suivantes :
- l'élément codant est en polymère magnétisable et de préférence en élastoferrite ;
- la couche de protection présente une épaisseur supérieure à 50 nanomètres, de manière à augmenter significativement la résistance superficielle à l'abrasion de l'élément codant ;
- la couche de protection présente une épaisseur inférieure à 500 nanomètres, ainsi l'influence sur les champs magnétiques est quasi nulle avec la plupart des matières qui peuvent être déposées par plasma ;
- la couche de protection est formée de carbone amorphe ou d'oxydes de silicium ;
- la couche de protection recouvre l'ensemble de la surface de l'élément codant et au moins en partie le manchon ;
- la couche de protection et le polymère magnétisable sont chimiquement liés au niveau de leur interface, de manière à augmenter l'adhésion entre ceux-ci ;
- une lèvre annulaire solidaire du codeur de déplacement présente une zone de contact destinée à venir en appui contre un carter fixe entourant l'arbre, de manière à ce que le codeur forme également un joint dynamique d'étanchéité, ladite zone de contact de la lèvre étant libre de toute couche de protection déposée par plasma.

L'invention se rapporte également à un dispositif comprenant un arbre rotatif et un codeur de déplacement qui comprend un manchon calé en rotation sur l'arbre et un élément codant solidaire dudit manchon, l'élément codant présentant une zone codeuse munie d'au moins un repère polarisé pour coder un déplacement angulaire et protégée par un moyen de protection, caractérisé en ce que le moyen de protection comprend une couche mince de matière déposée par plasma directement sur l'élément codant et solidaire dudit élément, qui recouvre au moins ladite zone codeuse.

Ce dispositif peut comprendre en outre un carter rempli de liquide dans lequel pénètre l'arbre rotatif, et dans lequel une lèvre annulaire solidaire du codeur angulaire présente une zone de contact venant en contact glissant avec le carter, qui assure l'étanchéité entre ledit arbre et ledit carter, ladite zone de contact de la lèvre étant libre de toute couche de protection déposée par plasma.

Par ailleurs, l'invention a pour objet un procédé de fabrication d'un codeur de déplacement dans lequel on fournit un manchon destiné à être calé sur un arbre mobile et un élément codant solidaire du manchon et présentant une zone codeuse, caractérisé en ce que le manchon et l'élément codant solidarisés sont placés dans une enceinte, puis soumis à un dépôt de matière activé par un plasma froid jusqu'à l'obtention d'une couche mince de protection sur au moins la zone codeuse de l'élément codant.

Dans des modes de mise en oeuvre préférés du procédé, on a recours entre autre à l'une ou à l'autre des dispositions suivantes :
- le dépôt est effectué par un procédé de dépôt en phase chimique vapeur améliorée (PECVD) adapté pour créer des liaisons chimiques covalentes entre le polymère magnétisable et la matière déposée ;
- le manchon et l'élément codant fournis présentent en outre une lèvre annulaire d'étanchéité présentant une zone de contact destinée à venir en appui contre un carter, ladite zone de contact étant recouverte par un cache pendant l'étape de dépôt, de manière à éviter la formation d'une couche de protection sur ladite zone de contact.

D'autres caractéristiques et avantages de l'invention apparaîtront au cours de la description qui va suivre, donnée à titre d'exemples non limitatifs en référence aux dessins annexés dans lesquels :
- la figure 1 est une vue en coupe schématique d'un arbre muni d'un codeur de déplacement selon un premier mode de réalisation de l'invention ;
- la figure 2 est une vue en coupe analogue à la figure 1 d'un deuxième mode de réalisation ;
- la figure 3 est une représentation schématique d'une enceinte de dépôt assisté par plasma dans laquelle des codeurs de déplacement en cours de réalisation sont représentés en coupe.

Sur les différentes figures, on a conservé les mêmes références pour désigner des éléments identiques ou similaires.

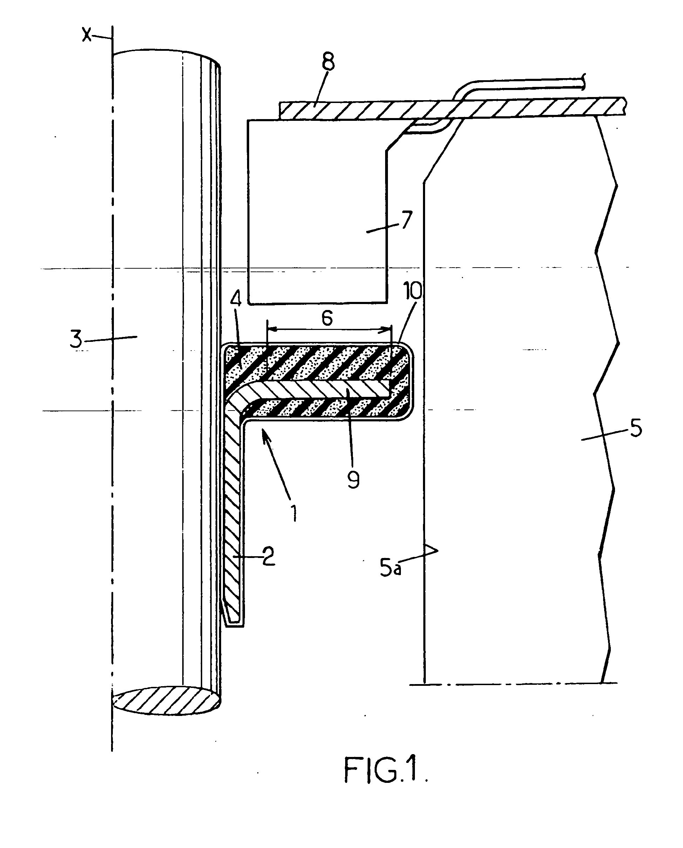

Comme on peut le voir sur la figure 1, le codeur angulaire 1 comprend un manchon 2 calé en rotation sur un arbre rotatif 3 et un élément codant en polymère magnétisable 4. Des repères polarisés sont prévus dans une zone 6, dite zone codeuse de l'élément codant.

Un carter fixe 5 entourant le codeur angulaire 1 sert de base fixe pour un capteur 7 solidarisé au carter par l'intermédiaire d'une platine 8.

L'arbre rotatif 3 peut être constitué par tout arbre de machine tournante, comme par exemple un arbre de transmission ou un arbre de roue. On notera que le codeur angulaire 1 n'est pas nécessairement placé sur une portion de l'arbre entouré par un carter fixe, mais peut être placé à distance de tout carter ou pallier du moment qu'un capteur peut être maintenu à proximité de la zone codeuse 6. Par ailleurs, il peut s'agir d'un arbre effectuant des mouvements de translation, le codeur permettant alors de connaître une position et/ou une vitesse linéaire.

Le manchon 2 est métallique et est monté sur l'arbre rotatif 3 par emmanchement à force. Ce montage particulièrement simple permet d'immobiliser le manchon 2 en rotation et en translation par rapport à l'arbre 3. Mais on peut utiliser tout autre montage qui assure une immobilisation en rotation du manchon par rapport à l'arbre. Il est également envisageable d'utiliser un manchon en matière plastique.

L'élément codant 4 est en élastoferrite, c'est-à-dire qu'il comprend une base en polymère de type élastomère qui assure le rôle de liant, et une forte proportion de particules de ferrite dont l'orientation magnétique peut être fixée lors de la vulcanisation de l'élastomère afin de créer des repères polarisés. Toutefois, il est possible d'utiliser d'autres types de polymère magnétisable. L'élément codant peut aussi être un aimant permanent recouvert par un polymère, par exemple par de l'élastomère. Dans ce dernier cas, la couche d'élastomère qui est généralement fine, peut présenter également des problèmes de résistance à l'abrasion.

Dans le mode de réalisation représenté à la figure 1, l'élément codant 4 est surmoulé sur un collet radial 9 du manchon 2 et est solidarisé avec celui-ci par adhérisation directe. Mais, l'élément codant peut être fixé mécaniquement, ou à l'aide d'une colle, au manchon. L'élément codant 4 ainsi réalisé présente une forme annulaire et s'étend globalement selon une direction radiale par rapport à l'arbre 3.

Les repères polarisés de la zone codeuse 6 sont formés par une succession de secteurs angulaires polarisés alternativement nord-sud, avec éventuellement un secteur non polarisé ou une zone polarisée qui est plus étendue ou plus réduite que les autres, afin de déterminer une position angulaire absolue de l'arbre. La zone codeuse 6 forme donc une piste circulaire dans ce mode de réalisation. Toutefois, si le codeur angulaire est utilisé uniquement pour détecter une rotation ou un sens de rotation de l'arbre, la présence de repères polarisés sur l'ensemble du pourtour du manchon 2 n'est pas nécessaire et dans ce cas l'élément codant 4 peut se présenter sous la forme d'une ou deux pastilles adhérisées sur le manchon.

Le capteur 7 doit être adapté pour détecter une variation du champ magnétique et pour cela on peut utiliser notamment un capteur à effet hall. Le capteur 7 est positionné de manière statique en regard de la zone codeuse 6 formée à une distance, appelée entrefer, qui est suffisamment proche pour détecter les variations du champ magnétique.

La zone codeuse 6 de l'élément codant est recouverte par une couche de protection 10. La couche 10 est formée directement sur l'élément codant 4 en élastoferrite par un procédé de dépôt activé par plasma qui sera décrit plus en détail par la suite. L'utilisation d'un procédé de ce type permet une fixation de la couche de protection 10 sur l'élastoferrite, malgré la nature particulièrement friable de ce matériau. Cette fixation peut être obtenue uniquement du fait que la couche de protection épouse parfaitement, au niveau atomique, la surface de l'élastoferrite, en réalisant ainsi une fixation mécanique. Mais cette fixation peut encore être renforcée en mettant en oeuvre un procédé de dépôt et une matière pour la couche 10, adaptés pour créer des liaisons chimiques covalentes entre l'élastoferrite de l'élément codant 4 et la couche de protection 10. Mais, dans un cas comme dans l'autre, les tests montrent que la couche 10 reste fixée à l'élément codant 4 dans les conditions normales d'utilisation du codeur 1, c'est-à-dire en présence de contraintes mécaniques dues à la rotation de l'arbre 3 malgré la présence d'un environnement agressif.

La couche 10 peut être formée d'une matière inorganique, et notamment d'oxydes de silicium (SiOₓ) ou d'oxydes de fluor. La couche 10 peut également être formée d'une matière organique comme par exemple du carbone amorphe, c'est-à-dire une agglomération d'atomes de carbone éventuellement liés chimiquement à des atomes d'hydrogène. On peut aussi prévoir que la couche 10 comprenne une faible proportion d'atomes d'une autre nature pour améliorer ses caractéristiques. Les oxydes de silicium, ainsi que le carbone amorphe, ont l'avantage de pouvoir être déposés par des procédés bien maîtrisés et de se lier fermement à l'élastoferrite. De plus, avec ces matières la couche de protection 10 présente une dureté particulièrement élevée.

La couche 10 est une couche mince, c'est-à-dire que son épaisseur est très nettement inférieure à l'épaisseur de la couche d'élastoferrite formant l'élément codant 4. On notera à ce propos que l'épaisseur de la couche 10 sur les figures ne respecte pas l'échelle des autres éléments représentés, pour une meilleure visibilité. L'épaisseur de la couche 10 peut être comprise entre quelques dizaines de nanomètres et plusieurs centaines de nanomètres. Par conséquent, elle ne modifie pas de manière significative les dimensions géométriques du codeur de déplacement 1 par rapport à une version non protégée du même codeur. La protection réalisée selon la présente invention peut donc être mise en oeuvre sur un codeur non protégé de l'art antérieur sans avoir à changer les dimensions géométriques du codeur et sans avoir à modifier le positionnement du capteur magnétique 7, contrairement aux moyens de protection connus dont l'épaisseur est de l'ordre du millimètre.

La couche de protection 10 doit s'étendre sur au moins la surface extérieure de l'élément codant 4 correspondant à la zone codeuse 6 pour préserver dans le temps la fonction de codage de celle-ci. Il est toutefois avantageux dans la plupart des cas que la couche de protection 10 recouvre l'ensemble de la surface extérieure de l'élément codant 4 pour éviter tout endommagement de l'élastoferrite. La majeure partie de la surface du manchon 2 est également recouverte par la couche de protection 10, mis à part certaines portions sur lesquelles repose le manchon lors du dépôt assisté par plasma.

L'élément codant 4 ainsi protégé par la couche 10 présente une résistance à l'abrasion nettement supérieure par rapport au même élément codant dépourvu de protection, et par conséquent la durée de vie du codeur de déplacement 1 est prolongée significativement lorsqu'il fonctionne dans un environnement agressif. Ceci doit être dû à l'augmentation de la dureté superficielle de l'élastoferrite par la couche déposée par plasma, bien que celle-ci ne présente pas une rigidité intrinsèque comparable à celle des éléments de protection, comme les tôles métalliques, prévues dans certains dispositifs antérieurs.

Il apparaît qu'une couche 10 présentant une épaisseur de l'ordre de 50 nanomètres fournit une protection significative contre l'abrasion de l'élastoferrite et n'a pas une influence décelable sur le champ magnétique créé par la zone codeuse 6, lorsqu'elle est formée d'oxydes de silicium ou de carbone amorphe. La protection peut être augmentée en augmentant l'épaisseur de la couche 10, mais il n'apparaît pas qu' au-delà d'une valeur d'environ 500 nanomètres, la protection fournie augmente encore de manière sensible. De plus, des épaisseurs nettement supérieures à 500 nanomètres pourraient avoir un effet décelable sur le champ magnétique.

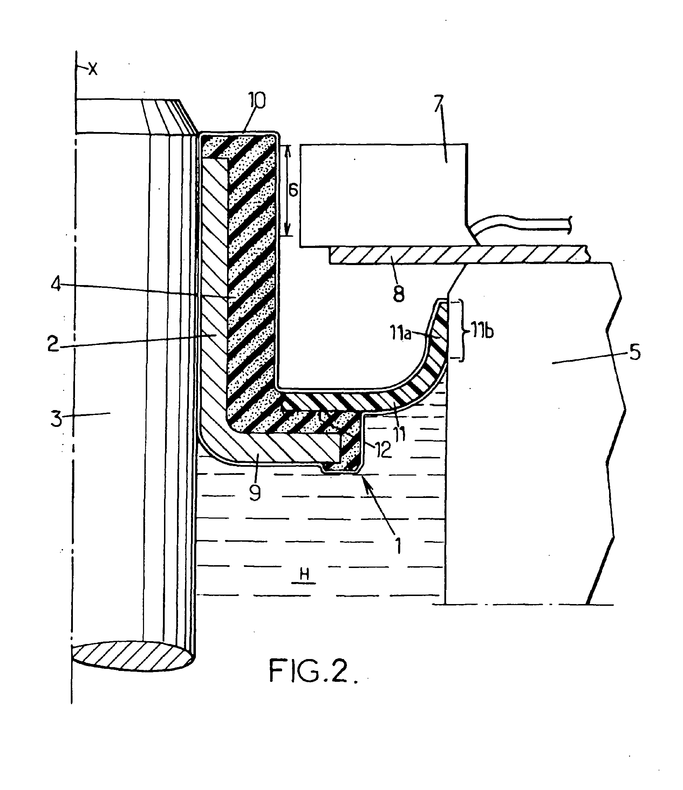

A la figure 2, est représenté un deuxième mode de réalisation du codeur angulaire 1 dans lequel la zone codeuse 6 de l'élément codant 4 en élastoferrite est orientée radialement vers l'extérieur, et non pas axialement comme dans le mode de réalisation représenté à la figure 1. Mais bien entendu, la couche de protection 10 déposée par plasma peut être appliquée à tout élément codant présentant une surface en polymère, quelle que soit son orientation par rapport à l'arbre mobile 3 ou par rapport au manchon 2. Dans ce deuxième mode de réalisation, le codeur de déplacement 1 comprend de plus une lèvre annulaire 11 qui présente une base solidaire du codeur 1. Plus particulièrement, la base de la lèvre 11 est adhérisée sur une surface annulaire 12 de l'élément codant 4, qui s'étend radialement par rapport à l'arbre 3. L'extrémité 11a de la lèvre vient en appui contre le carter fixe 5, de manière à assurer une étanchéité dynamique au liquide H contenu dans le carter. Ainsi, le codeur 1 remplit une fonction supplémentaire d'étanchéité et peut être monté à la sortie d'un carter moteur ou d'une boîte de vitesse contenant de l'huile chaude sous pression, pour assurer l'étanchéité dynamique entre l'arbre 3 et le carter 5. La zone de contact 11b de la lèvre 11 avec le carter 5 n'est pas recouverte par la couche de protection 10, de manière à conserver les qualités nominales d'étanchéité et de glissement de cette zone. La lèvre 11 peut notamment être réalisée en PTFE pour garantir un glissement avec un minimum de frottement contre le carter fixe 5. Or, si la zone de contact 11b était également recouverte par la couche de protection 10, elle ne bénéficierait plus des propriétés nominales du PTFE.

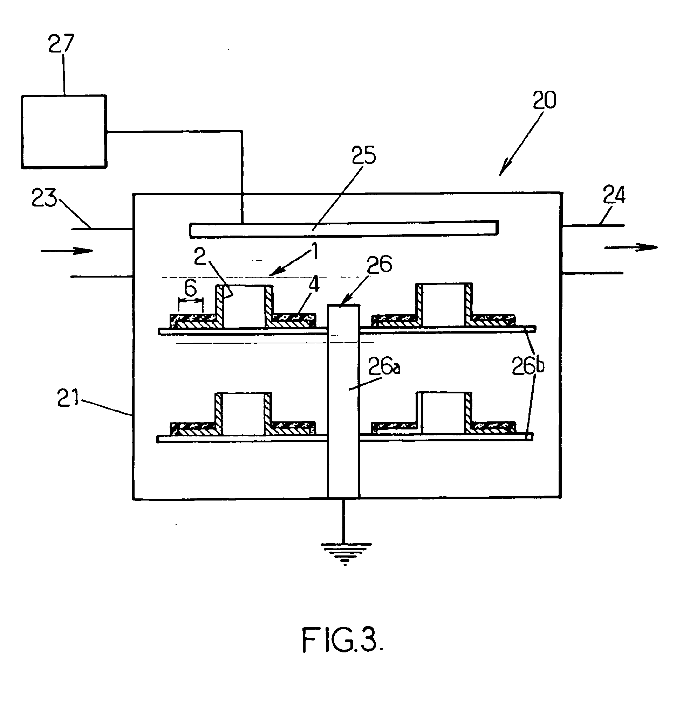

Le procédé de fabrication du codeur de déplacement 1 selon l'invention comprend tout d'abord la réalisation selon un procédé connu du codeur dépourvu de sa couche de protection 10, c'est-à-dire comprenant le manchon 2, l'élément codant 4 fixé au manchon 2 et présentant sa forme définitive après vulcanisation de l'élastoferrite, et éventuellement la lèvre d'étanchéité 11. Cet ensemble, après un éventuel traitement de nettoyage des surfaces à recouvrir, est placé dans une enceinte 21 de dépôt assistée par plasma, représentée à la figure 3.

Le dispositif de dépôt par plasma 20 comprend, outre l'enceinte 21, une entrée de gaz 23, une sortie de gaz 24, une première électrode 25 reliée à une source de puissance électrique 27 et une deuxième électrode 26.

La source de puissance électrique 27 est une source radiofréquence, ou hyperfréquence, permettant d'exciter le plasma et d'entretenir celui-ci de manière connue, à l'aide de la première électrode 25 générant un rayonnement électromagnétique radiofréquence ou micro-ondes. L'entrée 23 permet d'introduire différents gaz dans l'enceinte 21 selon l'étape du processus de dépôt et la matière dans laquelle doit être formée la couche de protection 10. La sortie 24 permet de faire un vide partiel dans l'enceinte.

Comme on peut le voir sur la figure 3, la deuxième électrode 26 comprend un mât 26a et des plateaux conducteurs 26b sur lesquels reposent les codeurs 1. Les codeurs ainsi disposés sont en contact électrique avec la deuxième électrode 26 et forment donc eux-mêmes une partie de cette électrode, ce qui favorise le dépôt du plasma sur les codeurs. Bien entendu, la surface de la zone codeuse 6 doit être dégagée pour que la couche de protection se forme efficacement sur celle-ci. Il est tout à fait possible de prévoir un support intermédiaire entre les plateaux 26b et les codeurs 1 pour augmenter la surface des codeurs recouverte par le dépôt.

Si le codeur 1 présente une lèvre d'étanchéité 11, il est préférable de recouvrir au moins la zone de contact 11b de celle-ci par un cache, pour éviter tout dépôt sur cette zone.

Les codeurs 1 sont mis en place dans l'enceinte avec éventuellement une solution de réactif, par exemple une solution de tétraméthylsilane pour déposer du SiOₓ.

Puis, on effectue un vide partiel dans celle-ci et on génère un plasma à l'aide de la source de puissance électrique 27 reliée à la première électrode 25, la deuxième électrode 26 étant reliée à la terre dans le mode de réalisation schématiquement représenté. On notera qu'il s'agit d'un plasma froid, c'est-à-dire n'excédant pas une température de l'ordre de 200° afin de ne pas endommager l'élément codant 4 en polymère magnétisable, ni réduire l'intensité des champs magnétiques créés par celui-ci. Le plasma, de type radiofréquence dans l'exemple mis en oeuvre, décompose le réactif qui ensuite forme le dépôt.

L'étape de dépôt comprend l'introduction d'un gaz réactif contenant des composés de la matière dans laquelle doit être réalisée la couche de protection. Par exemple, pour réaliser une couche de protection en carbone amorphe, on introduit du méthane.

La durée de dépôt de l'ordre d'une minute est ajustée en fonction de l'épaisseur désirée pour la couche de protection 10.

Les paramètres de fonctionnement du dispositif sont déterminés de manière à réaliser un dépôt en phase chimique vapeur amélioré (PECVD) dans le but de créer des liaisons chimiques covalentes entre le polymère magnétisable de l'élément codant 4 et la matière déposée sur celui-ci.

Une fois la phase de dépôt terminée, les gaz contenus dans l'enceinte sont évacués et celle-ci est remise à pression atmosphérique. Les codeurs 1 sont alors recouverts d'une couche de protection 10 et sont prêts à être utilisés sans post-traitement.

Bien entendu, les paramètres du procédé de dépôt indiqué ne sont nullement limitatifs, et tout dépôt assisté par plasma froid permettant de former une couche de matière organique et inorganique d'épaisseur appropriée peut être envisagé.

## Revendications

1. Codeur comprenant un manchon (2) destiné à être calé sur un arbre mobile (3), et un élément codant (4) solidaire du manchon, l'élément codant en polymère magnétisable présentant une zone codeuse (6) munie d'au moins un repère polarisé et protégée par un moyen de protection, **caractérisé en ce que** le moyen de protection comprend une couche mince (10) de matière déposée par plasma directement sur l'élément codant (4) et solidaire dudit élément, qui couvre au moins la zone codeuse (6) de celui-ci, et **en ce que** la couche mince (10) et le polymère magnétisable de l'élément codant (4) sont chimiquement liés au niveau de leur interface.

2. Codeur selon la revendication 1, dans lequel l'élément codant (4) est en élastoferrite.

3. Codeur selon la revendication 1 ou 2, dans lequel la couche de protection (10) présente une épaisseur supérieure à 50 nanomètres.

4. Codeur selon l'une quelconque des revendications précédentes, dans lequel la couche de protection (10) présente une épaisseur inférieure à 500 nanomètres.

5. Codeur selon l'une quelconque des revendications précédentes, dans lequel la couche de protection (10) est formée de carbone amorphe ou d'oxydes de silicium.

6. Codeur selon l'une quelconque des revendications précédentes, dans lequel la couche de protection (10) recouvre l'ensemble de la surface de l'élément codant (4) et au moins en partie le manchon (2).

7. Codeur selon l'une quelconque des revendications précédentes, dans lequel une lèvre annulaire (11) solidaire du codeur de déplacement (1) présente une zone de contact (llb) destinée à venir en appui contre un carter fixe (5) entourant l'arbre (3), ladite zone de contact (11b) de la lèvre étant libre de toute couche de protection déposée par plasma.

8. Dispositif comprenant un arbre rotatif (3) et un codeur de déplacement (1) selon l'une quelconque des revendications précédentes dont le manchon (2) est calé en rotation sur l'arbre (3).

9. Procédé de fabrication d'un codeur de déplacement dans lequel on fournit un manchon (2) destiné à être calé sur un arbre mobile, et un élément codant (4) en polymère magnétisable solidaire du manchon (2) et présentant une zone codeuse, **caractérisé en ce que** le manchon (2) et l'élément codant (4) solidarisés sont placés dans une enceinte (21), puis soumis à un dépôt de matière activé par un plasma froid jusqu'à l'obtention d'une couche mince de protection (10) sur au moins la zone codeuse (6) de l'élément codant (4).

10. Procédé selon la revendication 9, dans lequel le dépôt est effectué par un procédé de dépôt en phase chimique vapeur améliorée (PECVD) adapté pour créer des liaisons chimiques covalentes entre le polymère magnétisable et la matière déposée (10).

11. Procédé selon la revendication 9 ou 10, dans lequel le manchon (2) et l'élément codant (4) fournis présentent en outre une lèvre annulaire d'étanchéité (11) présentant une zone de contact (11b) destinée à venir en appui contre un carter (5), ladite zone de contact (11b) étant recouverte par un cache pendant l'étape de dépôt, de manière à éviter la formation d'une couche de protection sur ladite zone de contact.

## Patentansprüche

1. Kodierer, umfassend eine Muffe (2), welche dazu vorgesehen ist, mit einer bewegbaren Welle (3) gekoppelt zu sein, und ein Kodierelement (4), welches mit der Muffe zusammenhängend ist, wobei das Kodierelement aus magnetisierbarem Polymer einen Kodierbereich (6) aufweist, welcher mit wenigstens einer poralisierten Markierung versehen und von einem Schutzmittel geschützt ist, **dadurch gekennzeichnet, dass** das Schutzmittel eine dünne Materialschicht (10) umfasst, welche durch ein Plasma direkt auf das Kodierelement (4) abgeschieden und mit diesem Element zusammenhängend ist, welche wenigstens den Kodierbereich (6) desselben bedeckt, und dadurch, dass die dünne Schicht (10) und das magnetisierbare Polymer des Kodierelements (4) chemisch im Bereich ihrer Kontaktfläche verbunden sind.

2. Kodierer nach Anspruch 1, wobei das Kodierelement (4) aus Elastoferrit besteht.

3. Kodierer nach Anspruch 1 oder 2, wobei die Schutzschicht (10) eine Dicke größer als 50 Nanometer aufweist.

4. Kodierer nach einem der vorhergehenden Ansprüche, wobei die Schutzschicht (10) eine Dicker kleiner als 500 Nanometer aufweist.

5. Kodierer nach einem der vorhergehenden Ansprüche, wobei die Schutzschicht (10) aus amorphem Kohlenstoff oder Siliziumoxiden gebildet ist.

6. Kodierer nach einem der vorhergehenden Ansprüche, wobei die Schutzschicht (10) die Anordnung aus der Oberfläche des Kodierelements (4) und wenigstens einem Teil der Muffe (2) bedeckt.

7. Kodierer nach einem der vorhergehenden Ansprüche, wobei eine ringförmige Lippe (11), welche mit dem Bewegungskodierer (1) zusammenhängend ist, einen Kontaktbereich (11b) umfasst, welcher dazu vorgesehen ist, in Anlage gegen ein festes, die Welle (3) umgebendes Gehäuse (5) zu kommen, wobei der Kontaktbereich (11b) der Lippe frei jeglicher, von durch Plasma abgeschiedener Schutzschicht ist.

8. Vorrichtung, umfassend eine Drehwelle (3) und einen Bewegungskodierer (1) nach einem der vorhergehenden Ansprüche, wobei die Muffe (2) mit der Welle drehgekoppelt ist.

9. Verfahren zur Herstellung eines Bewegungskodierers, in welchem eine Muffe (2), welche dazu vorgesehen ist, mit einer bewegbaren Welle gekoppelt zu werden, und ein Kodierelement (4) aus magnetiserbarem Polymer, welches mit der Muffe (2) zusammenhängend ist und einen Kodierbereich aufweist, bereitgestellt werden, **dadurch gekennzeichnet, dass** die Muffe (2) und das Kodierelement (4), welche zusammenhängen, in einer Kammer (21) platziert werden, und dann einer Abscheidung von durch ein kaltes Plasma aktiviertem Material unterzogen werden, bis sich eine dünne Schutzschicht (10) wenigstens auf dem Kodierbereich (6) des Kodierelements (4) gebildet hat.

10. Verfahren nach Anspruch 9, wobei die Abscheidung durch ein Verfahren zum Abscheiden aus einer verbesserten chemischen Gasphase (PECVD) hervorgerufen wird, welches dazu eingerichtet ist, kovalente chemische Bindungen zwischen dem magnetisierbaren Polymer und dem abgeschiedenen Material (10) zu erzeugen.

11. Verfahren nach Anspruch 9 oder 10, wobei die bereitgestellte Muffe (2) und das bereitgestellte Kodierelement (4) ferner eine ringförmige Dichtungslippe (11) aufweisen, welche einen Kontaktbereich (11b) aufweist, welcher dazu vorgesehen ist, gegen ein Gehäuse (5) in Anlage zu kommen, wobei der Kontaktbereich (11b) während des Abscheidungsschritts abgedeckt wird, um die Bildung einer Schutzschicht auf dem Kontaktbereich zu verhindern.

## Claims

1. An encoder comprising a sleeve (2) for being held on a movable shaft (3), and an encoder element (4) secured to the sleeve, the encoder element made of magnetizable polymer presenting an encoding zone (6) provided with at least one polarization mark that is protected by protection means, the encoder being **characterized in that** the protection means comprise a thin layer (10) of material deposited by plasma directly on the encoder element (4) and secured to said element, which layer covers at least the encoding zone (6) thereof, and **in that** the thin layer (10) and the magnetizable polymer of the encoder element (4) are chemically bonded together at their interface.

2. An encoder according to claim 1, in which the encoder element (4) is made of elastoferrite.

3. An encoder according to claim 1 or claim 2, in which the protective layer (10) presents a thickness that is greater than 50 nm.

4. An encoder according to any one of preceding claims, in which the protective layer (10) presents a thickness that is less than 500 nm.

5. An encoder according to any one of preceding claims, in which the protective layer (10) is made of amorphous carbon or of silicon oxides.

6. An encoder according to any one of preceding claims, in which the protective layer (10) covers the entire surface of the encoder element (4) and at least a portion of the sleeve (2).

7. An encoder according to any one of preceding claims, in which an annular lip (11) secured to the displacement encoder (1) presents a contact zone (11b) for being brought to bear against a stationary casing (5) surrounding the shaft (3), said contact zone (11b) of the lip being free from any plasma-deposited protective layer.

8. A device comprising a rotary shaft (3) and a displacement encoder (1) according to any one of the preceding claims, and in which the sleeve (2) is held in rotation on the shaft (3).

9. A method of fabricating a displacement encoder in which there are provided a sleeve (2) for being held on a movable shaft, and an encoder element (4) made of magnetizable polymer secured to the sleeve (2) and presenting an encoding zone, the method being **characterized in that** the mutually-secured sleeve (2) and encoder element (4) are placed in an enclosure (21), and then subjected to deposition of material activated by a cold plasma until a thin protective layer (10) is obtained on at least the encoding zone (6) of the encoder element (4).

10. A method according to claim 9, in which deposition is performed by an improved chemical vapor deposition method (PECVD) adapted to create covalent chemical bonds between the magnetizable polymer and the deposited material (10).

11. A method according to claim 9 or claim 10, in which the sleeve (2) and the encoder element (4) as provided further present an annular sealing lip (11) presenting a contact zone (11b) for being brought to bear against a casing (5), said contact zone (11b) being covered by a mask during the deposition step so as to avoid forming a protective layer on said contact zone.
